# EUROPEAN PATENT APPLICATION

(11) **EP 1 788 831 A1**
(43) Date of publication of application: **23.05.2007**
(21) Application number: 06123939.8
(22) Date of filing: 13.11.2006
(51) Int. Cl.: H04Q 7/38, H04L 12/56

(54) **Mobile communications system, call control server, and call control method supporting call transmission between a packet switched and a circuit switched network having different telephone numbers**

(30) Priority: 16.11.2005 JP 2005330947
(71) Applicant: NEC CORPORATION, Tokyo (JP)
(72) Inventor: Sakata, Masayuki, Tokyo (JP)
(74) Representative: Betten & Resch

(57) **Abstract**

A mobile communications system has a subscriber database, located in a second mobile communications network, which manages subscriber information of a mobile terminal and registers location information in response to a location registration request made by the mobile terminal to the second mobile communications network, and registers location information in response to a location registration request made by the mobile terminal to a first mobile communications network, and a call control server which changes a caller number in a call request to a telephone number assigned for the second mobile communications network and transmits the call request to a connection destination upon receiving the call request from the mobile terminal which is located under the first mobile communications network.

## Description

### BACKGROUND OF THE INVENTION

### 1. Field of the invention

The present invention relates to a mobile communications system, call control server, and call control method and, more particularly, to a mobile communications system which performs communication among a mobile communications system which is a circuit switched network, a mobile communications system which is an IP (Internet Protocol) network, and a PSTN (Public Switched Telephone Network) which is a circuit switched network, the former two of which are run by different telecommunications carriers.

### 2. Description of the related art

The tendency to use, as networks constituting ground networks for a mobile communications system, a ground network employing a packet switching system typified by an IP network as well as a conventional network employing a circuit switching system is growing. There are developed technologies which allow communication between mobile terminals in an environment where a circuit switched network and a packet switched network coexist as ground networks for a mobile communications system in whichever mobile terminals are located in the circuit switched network or the packet switched network. For example, in a mobile communications system disclosed in Japanese Patent Laid-Open No. 2002-186011, a mobile communications network employing a circuit switching system and an IP network employing a packet switching system coexist, and a location management computer which manages the location of a mobile terminal is provided for each of the networks. As location management computers, an HLR (Home Location Register) which performs location management in the circuit switched network and a SIP (Session Initiation Protocol) server which performs location management in the IP network are installed.

If a mobile terminal is located in the IP network, the mobile terminal makes a location registration request to the IP network. The SIP server registers the location of the mobile terminal and makes a location registration request to the HLR. With this operation, the location of the mobile terminal located in the IP network is also registered by the HLR, which performs location management in the circuit switched network. If communications repeater equipment which relays communication among a PSTN, the IP network, and the circuit switched network receives an incoming request addressed to a mobile terminal from the PSTN, it determines whether the mobile terminal is located in the mobile communications network or in the IP network on the basis of the location information of the mobile terminal registered in the HLR. The communications repeater equipment relays communication with the mobile terminal through the network, which covers the mobile terminal.

The network configuration of the mobile communications system disclosed in Japanese Patent Laid-Open No. 2002-186011 is premised on the use of a circuit switched network and a packet switched network provided by a single telecommunications carrier. Accordingly, a mobile terminal need not use different telephone numbers for the circuit switched network and packet switched network, and can accept an incoming call using one telephone number.

However, if a mobile telecommunications carrier which uses a packet switched network as a ground network and a mobile telecommunications carrier which uses a circuit switched network as a ground network are different from each other, since the networks are operated under different number systems, it is difficult for a mobile terminal to communicate by using a single telephone number. Therefore, if the mobile telecommunications carriers are different and different telephone numbers are assigned to the mobile terminal for the mobile telecommunications carrier, i.e., the circuit switched network and packet switched network, the technology described in Japanese Patent Laid-Open No. 2002-186011 cannot implement a one-number system in which one of the telephone numbers is used as a universal telephone number of the mobile terminal at which an incoming call is accepted.

### SUMMARY OF THE INVENTION

An exemplary feature of the invention is to provide a mobile communications system, call control server, and call control method capable of implementing a one-number system in which even if a mobile terminal assigned different telephone numbers for respective mobile telecommunications carriers uses different telephone numbers in networks (a circuit switched network and packet switched network), one of the telephone numbers is used as a universal telephone number at which an incoming request is accepted.

The mobile communications system according to the present invention has a subscriber database and a call control server. The subscriber database, located in a second mobile communications network, manages subscriber information of a mobile terminal and registers location information in response to a location registration request made by the mobile terminal to the second mobile communications network, and registers location information in response to a location registration request made by the mobile terminal to a first mobile communications network. The call control server changes a caller number in a call request to a telephone number assigned for the second mobile communications network and transmits the call request to a connection destination upon receiving the call request from the mobile terminal which is located under the first mobile communications network. When the location registration request is made by the mobile terminal to the first mobile communications network, the location information is also registered in a Home Location Register in the first mobile communications network.

A call control server according to the present invention has a location registration control unit and a call control unit. The location registration control unit requests a subscriber database to register location information in response to a location registration request made by the mobile terminal in the second mobile communications network and obtains subscriber information of the mobile terminal from the subscriber database. The call control unit changes a caller number in a call request to the telephone number assigned for the second mobile communications network and transmits the call request to a connection destination upon receiving the call request from the mobile terminal which is located under the first mobile communications network.

A call control method according to the present invention has a first registering step, a second registering step and a call request transmitting step. The first registering step is for registering location information of the mobile terminal to a subscriber database through a call control server which is installed in the second mobile communications network upon receiving a location registration request from the mobile terminal in the second mobile communications network. The second registering step is for registering location information of the mobile terminal to a subscriber database through a mobile switching system which is installed in the first mobile communications network upon receiving a location registration request from the mobile terminal in the first mobile communications network. The call request transmitting step is performed by the call control server to replace a caller number in a call request from the telephone number assigned for the first mobile communications network to the telephone number assigned for the second mobile communications network, and to transmit the call request to a connection destination upon receiving the call request from the mobile terminal located in the first mobile communications network.

With the above configuration, according to the present invention, the mobile communications system can implement a one-number system in which even if a mobile terminal assigned different telephone numbers for respective mobile telecommunications carriers uses different telephone numbers in a circuit switched network or packet switched network, one of the telephone numbers is used as a universal telephone number at which an incoming request is accepted.

### BRIEF DESCRIPTION OF THE DRAWINGS

The above and other exemplary features, and advantages of the present invention will become more apparent from the following detailed description when taken in conjunction with the accompanying drawings wherein:
FIG. 1 is a block diagram showing the configuration of a mobile communications system according to an exemplary embodiment of the present invention;
FIG. 2 is a sequence chart showing the operation for location registration performed by a UE shown in FIG. 1;
FIG. 3 is a flow chart showing the control operation performed by a mobile switching system in FIG. 2;
FIG. 4 is a sequence chart showing the operation for outgoing connection when the UE shown, in FIG. 1 originates a telephone call;
FIG. 5 is a flow chart showing the control operation performed by the mobile switching system in FIG. 4 when the UE under the mobile communications network originates the telephone call;
FIG. 6 is a flow chart showing the control operation performed by a call control server in FIG. 4 when the UE under the mobile communications network originates the telephone call;
FIG. 7 is a sequence chart showing the operation for incoming connection to the UE shown in FIG. 1;
FIG. 8 is a flow chart showing the control operation performed by the call control server in FIG. 7 for the incoming connection to the UE;
FIG. 9 is a block diagram showing another configuration of the mobile communications system according to the embodiment of the present invention;
FIG. 10 is a flow chart showing the control operation performed by the UE in FIG. 4 when the UE originates a telephone call;
FIG. 11 is a flow chart showing the control operation performed by the call control server in FIG. 4 when the UE originates the telephone call;
FIG. 12 is a flow chart showing the control operation performed by the call control server in FIG. 7 for the incoming connection to the UE; and
FIG. 13 is a flow chart showing the control operation performed by the UE in FIG. 7 for the incoming connection to the UE; and
FIG. 14 is a block diagram showing the call control server according to the embodiment of the present invention.

### DETAILED DESCRIPTION OF THE EXEMPLARY EMBODIMENTS

Exemplary embodiments of the present invention will be explained next.

The present invention relates to call origination and termination operation using a UE (User Equipment) which has double telephone numbers assigned by a telecommunications carrier providing a communications service in an IP network and a telecommunications carrier providing a communications service in a circuit switched network respectively, and
characterized by an operation for location registration performed in respective networks, i.e., the IP network and the circuit switched network.

The present invention also implements a one-number system. In the one-number system, a call control server having accepted a call addressed to the UE by the telephone number for the IP network performs control to convert the telephone number for the IP network into that for the circuit switched network when transferring the call to the UE located in the circuit switched network, and the call transferred to the circuit switched network is terminated to the UE using the telephone number for the circuit switched network.

A detailed explanation will be given below with reference to the drawings.

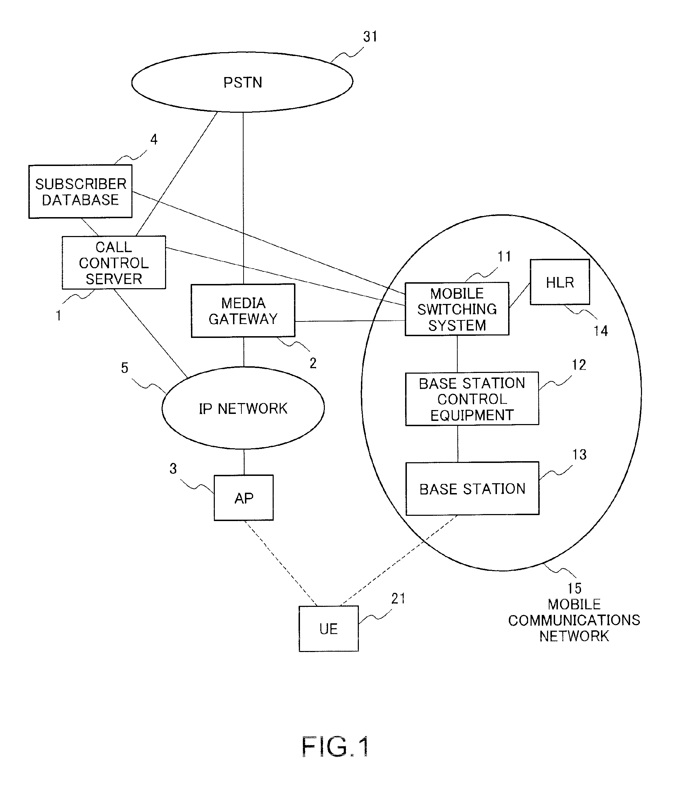

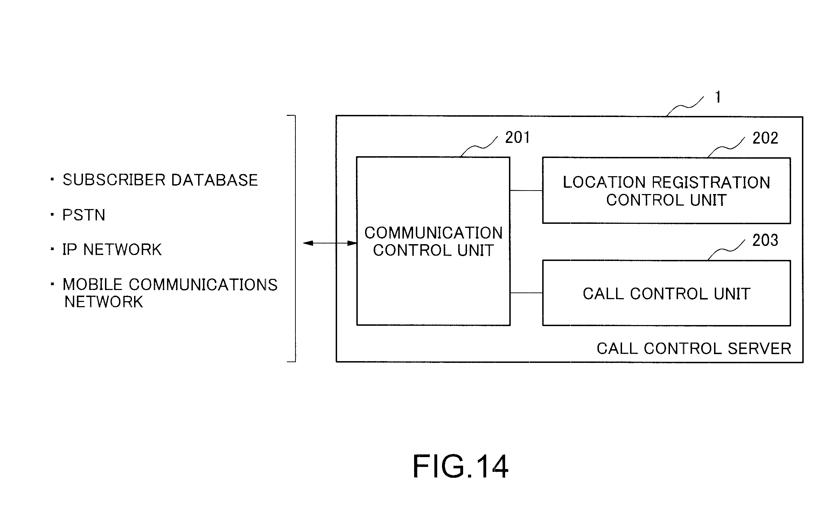

FIG. 1 is a diagram showing the configuration of a mobile communications system according to an exemplary embodiment of the present invention. An IP network 5 and a mobile communications network 15 which is the circuit switched network shown in FIG. 1 each cover a UE 21 through a radio channel, i.e., the UE 21 can perform communications through either network. A call control server 1, a media gateway 2, and a subscriber database 4 belong to the IP network 5. Each of the call control server 1 and media gateway 2 is connected to a PSTN (Public Switched Telephone Network) 31 and the mobile communications network 15. The call control server 1 controls transmission and reception of signaling for setting a voice path in the IP network 5, and it has three main control units as shown in FIG. 14. A communication control unit 201 performs communication control for communication with the media gateway 2, the subscriber database 4, the PSTN 31, the IP network 5 and the mobile communications network 15 respectively. A location registration control unit 202 is provided for location registration control to be performed by the present invention which will be described later. A call control unit 203 is provided for call control to be performed by the present invention which will be also described later. The media gateway 2 controls conversion of voice data into media data required in each network at the time of communication among the PSTN 31, IP network 5, and mobile communications network 15. More specifically, the media gateway 2 transmits and receives actual voice data and, for example, converts an IP voice packet into ISDN (Integrated Service Digital Network) voice and vice versa between the IP network 5 and the PSTN 31 or mobile communications network 15.

The interface of the call control server 1 with the IP network 5 ormedia gateway 2 conforms to IP (Internet Protocol), and the interface thereof with the PSTN 31 conforms to a common channel signaling system. Similarly, the interface of the media gateway 2 with the IP network 5 conforms to IP, and the interface thereof with the PSTN 31 conforms to a common channel signaling system.

The subscriber database 4 manages, in a way common to the IP network 5 and mobile communications network 15, the subscriber information of the UE 21 which has double telephone numbers as one for the IP network 5 and one for the mobile communications network 15. The interface of the subscriber database 4 with the call control server 1 conforms to IP. The subscriber database 4 performs terminal authentication processing and location information management for the UE 21.

Signaling and an IP voice packet in the IP network 5 are received at an AP (Access Point) 3 and transmitted from the AP 3 to the UE 21 through a radio channel. If the AP 3 uses a wireless LAN as a radio channel, the mechanism of communication between the IP network and the UE 21 becomes the same as that of IP telephone service using a commonly used wireless LAN.

A mobile switching system 11, base station control equipment 12, a base station 13, and an HLR 14 belong to the mobile communications network 15, which is a circuit switched network. In the mobile communications network 15, voice communication is performed through the mobile switching system 11, base station control equipment 12, and base station 13. The base station 13 and a UE 21 are connected to each other through a radio access channel such as W-CDMA (Wideband-Code Division Multiple Access) or CDMA2000. The HLR 14 manages various types of data on a UE covered by the mobile communications network 15 and performs terminal authentication processing whether the UE can use the mobile communications network 15, when the UE is to use the mobile communications network 15. The HLR 14 is connected to the mobile switching system 11 using a protocol conforming to the mobile communications system.

The media gateway 2 and mobile switching system 11 communicate a voice packet conforming to ISDN with each other. The call control server 1 and mobile switching system 11 exchange information with each other using signaling conforming to a common channel signaling system. The mobile switching system 11 has interface means for reading out subscriber information from the subscriber database 4 using a protocol conforming to the mobile communications system.

In a conventional configuration of the mobile communications network, HLR is provided for a server which manages location information and subscriber information for respective UEs covered by the mobile communications network. However, in this exemplary embodiment, the HLR 14 is used for performing the terminal authentication processing whether the UE 21 can be allowed to access to the mobile communications network 15, and the actual subscriber information for the UE 21 is stored and managed by the subscriber database 4 in the IP network. Also, in the conventional configuration of the mobile communications system, a mechanism is often used to transfer information in the HLR 14 to a VLR (Visitor Location Register) of a network as a destination to visit. However, in this exemplary embodiment, a VLR is incorporated in the mobile switching system 11.

The operation will be explained next.

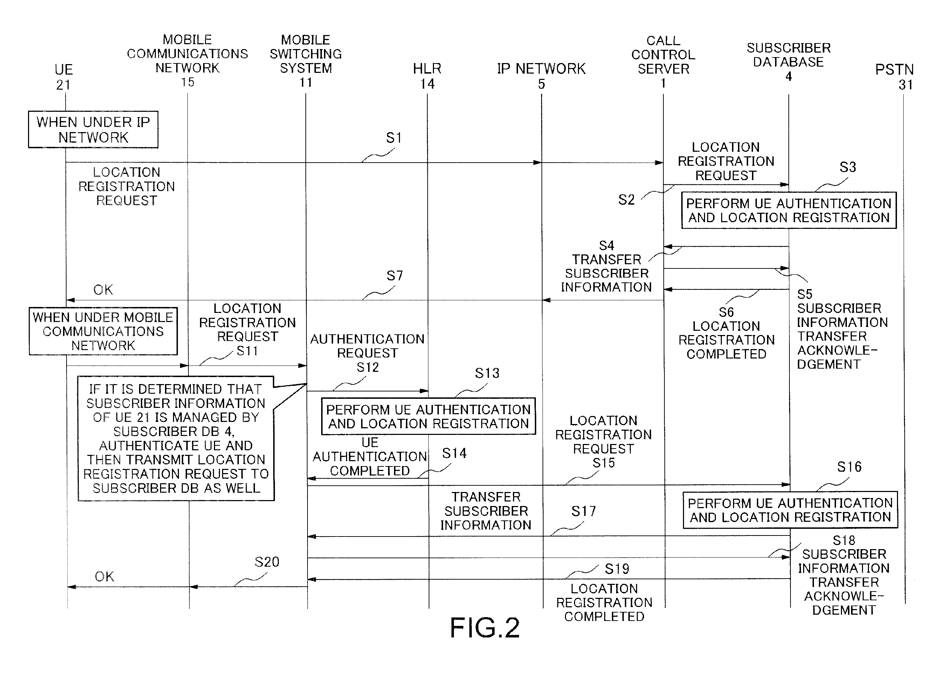

FIG. 2 is a sequence chart showing the operation for location registration performed by the UE 21 shown in FIG. 1. Location registration operation performed by the UE 21 will be explained with reference to FIG. 2.

When the UE 21 puts power-on or detects a change in location where it is present, it makes a location registration request.

If the UE 21 is under the IP network 5, it knows, from information notified by the AP 3, that it is located in the IP network 5, and thus, it uses a telephone number for the IP network 5 as a caller number when it accesses the call control server 1 (step S1).

The call control server 1 requests the subscriber database 4 to register the location information of the UE 21 based on the information contained in a location registration request transmitted from the UE 21 (step S2). The subscriber database 4 attempts to perform terminal authentication using the terminal ID of the UE 21.

If the UE 21 is properly authenticated, the subscriber database 4 registers the location information (step S3). Then, the subscriber database 4 transfers the subscriber information of the UE having made the location registration request to the call control server 1 (step S4).

The call control server 1 responds to the subscriber database 4 to the effect that it has received the transferred subscriber information (step S5). Upon receipt of the response to the transfer of the subscriber information from the call control server 1, the subscriber database 4 notifies the call control server 1 of completion of the location registration (step S6). Then, the call control server 1 notifies the UE 21 of completion of the location registration (step S7).

On the other hand, if the UE 21 is under the mobile communications network 15, it accesses the mobile switching system 11 via the base station 13 and base station control equipment 12 in the mobile communications network 15 (step S11). Since the UE 21 knows, from information notified by the base station 13, that it is located in the mobile communications network 15, it uses a telephone number for the mobile communications network 15 as a caller number.

The mobile switching system 11 first makes a location registration request to the HLR 14, when it detects that the subscriber information of the UE 21 is managed by the subscriber database 4 in the IP network 5 (step S12). If the HLR 14 identifies that the UE 21 is a valid terminal in the mobile communications network 15, and the terminal is properly authenticated, the HLR 14 registers the location of the UE 21 (step S13). The HLR 14 registers the location information of the UE 21 and notifies the mobile switching system 11 of completion of terminal authentication and location registration of the UE 21 (step S14).

The mobile switching system 11 then makes a location registration request to the subscriber database 4 (step S15). In location registration at this time, only identification information of the mobile switching system 11 which performs the location registration request may be registered as location information in the subscriber database 4 for indicating that the UE 21 is under the mobile communications network 15. The detailed location information of the UE 21 such as in which location registration area the UE 21 is present need not be registered. This is because information managed by the communications carrier having the mobile communications network should not be registered unnecessarily in the subscriber database 4 which is managed by the different communications carrier.

The subscriber database 4 determines whether the UE 21 is a valid terminal for using both networks of the IP network 5 and the mobile communications network 15. If the determination result is affirmative, the subscriber database 4 registers the location of the UE 21 (step S16) and transfers the subscriber information of the UE 21 to the mobile switching system 11 (step S17). Upon receipt of a response to the transfer of the subscriber information from the mobile switching system 11 (step S18), the subscriber database 4 notifies the mobile switching system 11 of completion of the location registration (step S19). The mobile switching system 11 notifies the UE 21 of the completion of the location registration through the mobile communications network 15 (step S20).

The method for the mobile switching system 11 to detect that the subscriber information of the UE 21 is managed by the subscriber database 4 in the IP network 5 can be performed based on information such as subscriber ID or terminal ID which is to be transmitted from the UE 21 included in the location registration request. The mobile switching system 11 judges whether the UE21 is an accessible terminal not only to the mobile communications network 15 but also to the IP network 5 based on the information of the subscriber ID or the terminal ID. If it detects that the UE 21 is a valid terminal, the mobile switching system 11 judges that the subscriber information of the UE 21 is managed by the subscriber database 4 in the IP network 5. Note that if the UE 21 is determined as a terminal incapable of connecting to the IP network 5, the location registration operation becomes the same as that in a conventional mobile communications network, i.e., terminal authentication and location registration of the UE 21 are performed only in the HLR 14.

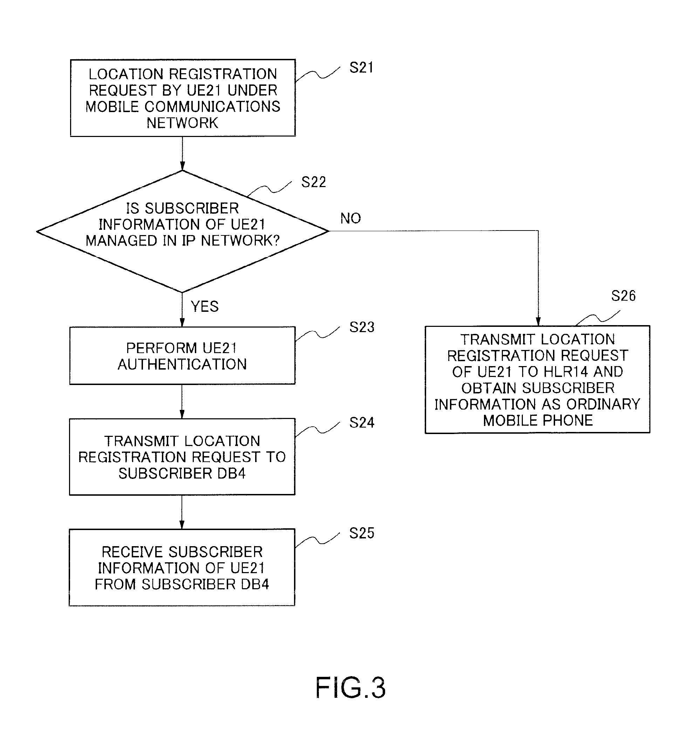

FIG. 3 is a flow chart showing the control operation performed by a mobile switching system in FIG. 2 when the UE 21 is under the mobile communications network 15.

When the location registration request is performed by the UE 21 under the mobile communications network 15 (step S21), the mobile switching system 11 judges whether subscriber information of the UE 21 is managed in the IP network 5 or in the mobile communications network 15 (step S22) . When the mobile switching system 11 detects that the subscriber information of the UE 21 is managed in the mobile communication network 15, the mobile switching system 11 transmits the location registration request to the HLR 14 for location registration to be performed by the HLR 14 as an ordinary mobile phone (step S22 : NO). Then, the mobile switching system 11 obtains the subscriber information of the UE 21 from the HLR 14 and completes the location registration processing (step S26).

On the other hand, when the mobile switching system 11 detects that the subscriber information of the UE 21 is managed in the IP network 5, the mobile switching system 11 requests the HLR 14 to perform an authentication of the UE 21 in the mobile communications network 15 (step S23). If the UE 21 is properly authenticated, the mobile switching system 11 requests the subscriber database 4 in the IP network 5 to perform the location registration by transmitting the location registration request (step S24). The mobile switching system 11, then, receives the subscriber data of the UE 21 from the subscriber database 4 and completes the location registration processing (step S25).

As described above, the location information where the UE 21 is present is registered in the subscriber database 4 in the IP network 5 through the location registration request performed by the UE 21. Also, as described above, if the UE 21 is under the mobile communications network 15, only identification information of the mobile switching system 11 which performs the location registration request may be registered as location information in the subscriber database 4 for indicating that the UE 21 is under the mobile communications network 15.

Next, call connection operation of the UE 21 performed in each of the IP network 5 and mobile communications network 15 will be explained.

First, outgoing connection from the UE 21 will be explained.

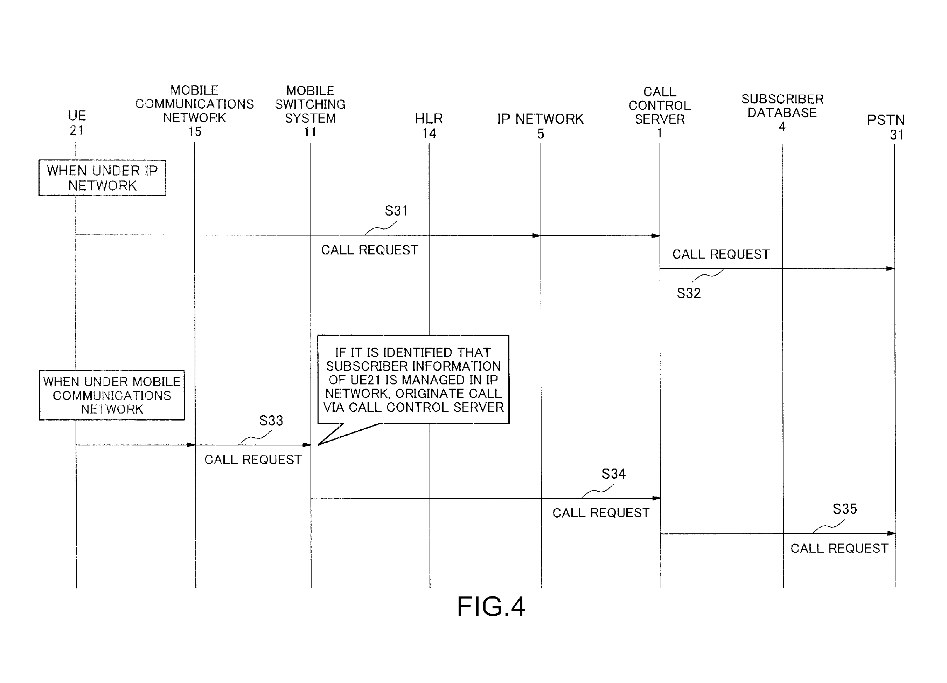

FIG. 4 is a sequence chart showing the operation for outgoing connection when the UE shown in FIG. 1 originates a telephone call.

When the UE 21 is under the IP network 5, the UE 21 transmits a call request using the telephone number for the IP network 5 as a caller number. The call request is received by the call control server 1 through the AP 3 (step S31). The call control server 1 identifies the connection destination telephone number contained in the call request and determines that the call request is an outgoing connection to the PSTN 31. The call control server 1 sends out the call request signal to the PSTN 31 (step S32).

Note that in communication between the UE 21 and the connection destination, an IP packet transmitted from the UE 21 is relayed by the media gateway 2, converted into a media signal with a format required for communication with the PSTN 31, and transmitted. In contrast, a signal from the PSTN 31 is converted into an IP packet at the media gateway 2 and transmitted to the UE 21.

The operation of outgoing connection from the UE 21 which is under the mobile communications network 15 will be explained.

The UE 21 transmits a call request using the telephone number for the mobile communications network 15 as a caller number, and the call request is received by the mobile switching system 11 through the base station 13 and base station control equipment 12 within the mobile communications network 15 (step S33).

When the mobile switching system 11 identifies, by information contained in the call request, that the subscriber information of the UE 21 is managed in the IP network, the mobile switching system 11 transmits the call request to the call control server 1 in the IP network (step S34).

The call control server 1 identifies the connection destination telephone number contained in the call request transmitted from the mobile switching system 11 and determines that the call request is an outgoing connection to the PSTN 31. The call control server 1 sends out the call request signal to the PSTN 31 (step S35).

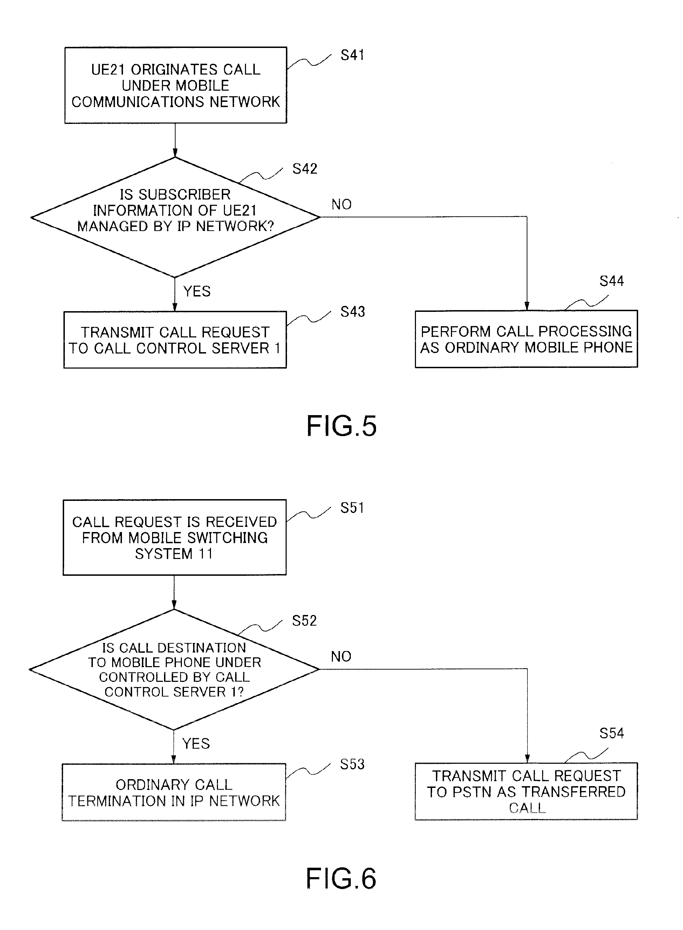

FIG. 5 is a flow chart showing the control operation performed by the mobile switching system in FIG. 4 when the UE under the mobile communications network originates the telephone call.

When the UE 21 under the mobile communications network 15 originates the telephone call (step S41), the call request for the call is received by the mobile, switching system 11. The mobile switching system. 11 judges whether the subscriber information of the UE 21 is managed in the IP network 5 or in the mobile communications network 15 by using information contained in the call request (step S42). If the mobile switching system 11 identifies that the subscriber information of the UE 21 is managed in the mobile communications network 15 (step S42: NO), it performs call processing for the call as an ordinary mobile phone (step S44). If the mobile switching system 11 identifies that the subscriber information of the UE 21 is managed in the IP network 5 (step S42: YES), the mobile switching system 11 transmits the call request to the call control server 1 in the IP network (step S43) .

The operation of the call control server 1 at the time of call origination by the UE 21 under the mobile communications network 15 will be explained.

FIG. 6 is a flow chart showing the control operation performed by the call control server in FIG. 4 when the UE under the mobile communications network originates the telephone call.

When the UE 21 under the mobile communications network 15 has originated the telephone call, the mobile switching system 11 transmits the call request to the call control server 1 in the IP network at the step S43 in FIG. 5 (also, step S34 in FIG. 4). The call request transmitted from the mobile switching system 11 is received at the call control server 1 in the IP network 5 (step S51 in FIG. 6).

When the call control server 1 receives the call request from the mobile switching system 11, it identifies the connection destination of the call by using information contained in the call request (step S52). When the call control server 1 identifies that the connection destination of the call is to a terminal under the IP network 5, which is under controlled by the call control server 1 (step S52: YES), it performs ordinary call termination processing in the IP network 5 (step S53). On the other hand, when the call control server 1 identifies that the connection destination of the call is not to a terminal under the IP network 5 but to the PSTN 31 (step S52 : NO), it transmits the call request to the PSTN 31 as a transferred call (step S54).

Note that communication between the UE 21 and the connection destination is relayed by the media gateway 2.

The operation of terminating an incoming call addressed to the UE will be explained.

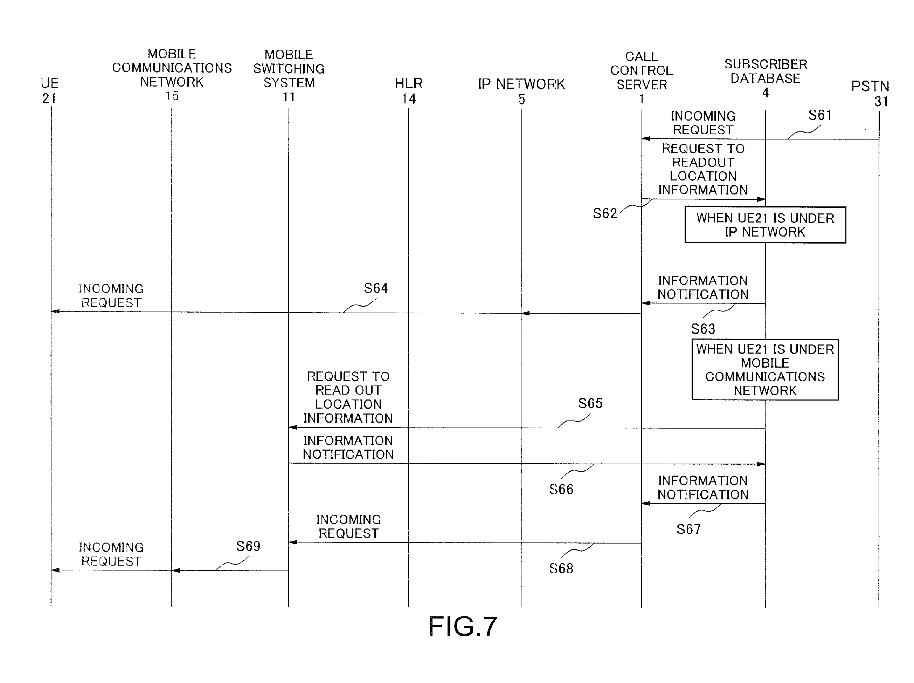

FIG. 7 is a sequence chart showing the operation for incoming connection to the UE shown in FIG. 1

An incoming request from the PSTN 31 is first received by the call control server 1 (step S61). The call control server 1 having received the incoming request inquires of the subscriber database 4 where the UE 21 as a call destination is present (step S62).

As explained with reference to the location registration operation, subscriber information including the location information of the UE 21 is managed by the subscriber database 4. Accordingly, the subscriber database 4 having been inquired of the location information of the UE 21 by the call control server 1 notifies the call control server 1 of the location information on the basis of location information it manages.

If the UE 21 is under the IP network 5, the subscriber database 4 returns the location information of the UE 21 in the IP network 5 registered therein to the call control server 1 (step S63). The call control server 1 having received the location information of the UE 21, performs incoming call termination processing to the UE 21 via the AP 3 connected to the IP network 5 (step S64).

On the other hand, if the UE 21 is present within the mobile communications network 15, the subscriber database 4 identifies that the UE 21 is under the mobile communications network 15 by detecting the identification information of the mobile switching system 11 which has been registered in the subscriber database 4 as the location information of the UE 21. Then, the subscriber database 4 sends an inquiry to the mobile switching system 11 for requesting the location information of the UE 21 managed in the mobile communications network 15 (step S65). On the response to the inquiry, the mobile switching system 11 returns the location information of the UE 21 managed in the mobile communications network 15 to the subscriber database 4 (step S66). Then, the subscriber database 4 returns the location information of the UE 21 received from the mobile switching system 11 to the call control server 1 (step S67). As the result, the call control server 1 knows the mobile switching system 11 which controls the UE 21, and then transfers the incoming request to the mobile switching system 11 (step S6B). The mobile switching system 11, which has received the incoming request from the call control server 1, performs incoming call termination processing to the UE 21 via the base station control equipment 12 and base station 13 in the mobile communications network 15 (step S69).

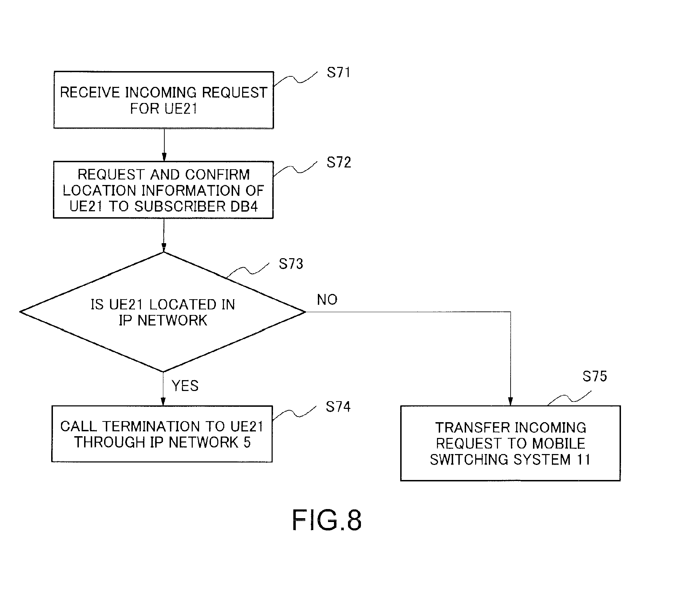

FIG. 8 is a flow chart showing the control operation performed by the call control server in FIG. 7 for the incoming connection to the UE.

The call control server 1 receives the incoming request for the UE 21 (step S71). The call control server 1 having received the incoming request inquires of the subscriber database 4 where the UE 21 as a call destination is present (step S72). As the result of the inquiry, if it is identified that the UE 21 is located in the IP network 5 (step S73: YES), the call control server 1 transmits the incoming request to the UE 21 in the IP network 5 as explained in the step S64 of FIG. 7 (step S74). On the other hand, if it is identified that the UE 21 is located in the mobile communications network 15 (step S73: NO), the call control server 1 transmits the incoming request for the UE 21 to the mobile switching system 11 as explained in the steps S65 to S68 of FIG. 7 (step S75).

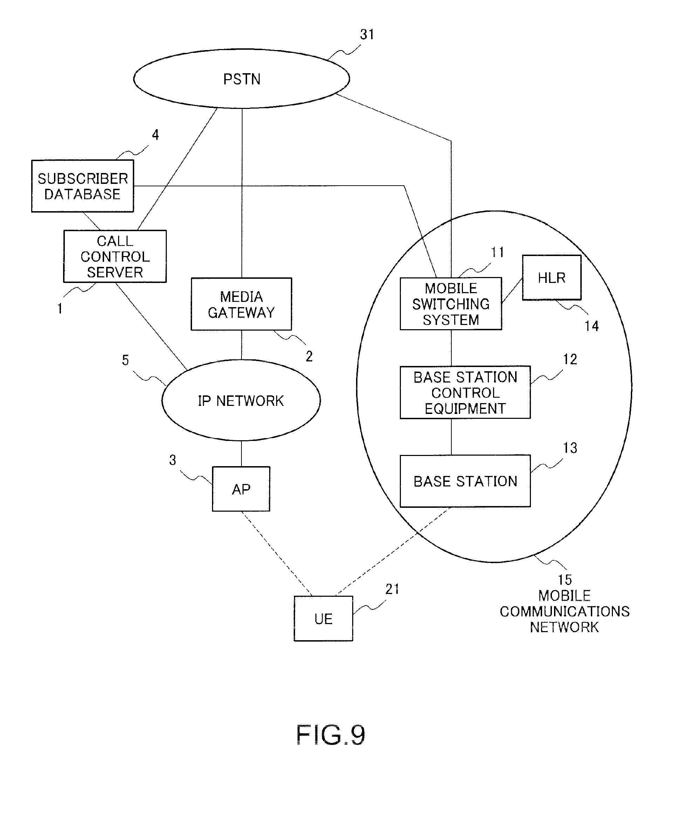

FIG. 9 is a diagram showing another configuration of the mobile communications system according to the embodiment of the present invention.

The basic function of equipment shown in FIG. 9 is the same as equipment shown in FIG. 1. However, it is different from the configuration shown in FIG. 1 in that a mobile switching system 11 is directly connected to the PSTN 31 and that the media gateway 2 is not connected to the mobile switching system.

For this reason, even with a network configuration in which the IP network 5 and the mobile communications network 15 cannot be directly connected to each other, both networks can be connected via the PSTN 31.

In this configuration as well, the subscriber database 4 is connected to the call control server 1 and the mobile switching system 11. Accordingly, the location registration operation and basic control operation such as call routing in each of the IP network 5 and mobile communications network 15 are not different from those explained in the configuration of FIG. 1.

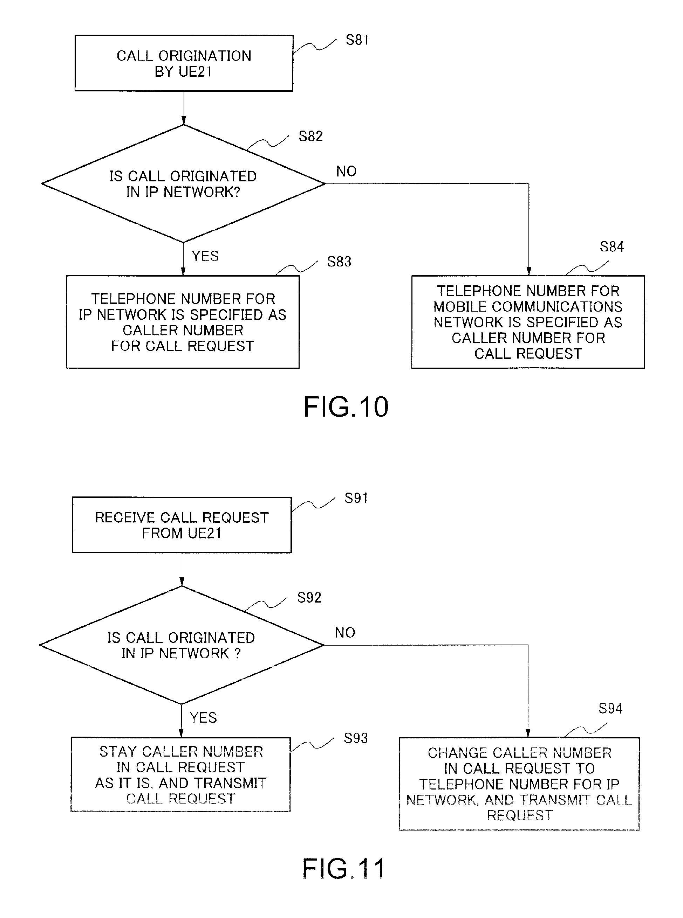

Next, how the one-number system is implemented in the outgoing connection and incoming connection explained in FIGs. 4 to 8 for the UE which has double telephone numbers assigned for the IP network and the circuit switched network respectively will be explained with referring to FIGs. 10 to 13. In the one-number system, the call control server having accepted a call addressed to the UE by the telephone number for the IP network performs control to convert the telephone number for the IP network into that for the circuit switched network when transferring the call to the UE located in the circuit switched network, and the call transferred to the circuit switched network is terminated to the UE using the telephone number for the circuit switched network.

FIG. 10 is a flow chart showing the control operation performed by the UE in FIG. 4 when the UE originates a telephone call.

The UE 21 is aware of the network, the IP network 5 or the mobile communications network 15, to which it has performed the location registration. Therefore, when it originates a telephone call (step S81 of FIG. 10), it specif ies the telephone number of the UE 21 for the IP network 5 as a caller number for accessing to the IP network 5 (step S83 of FIG. 10, and step S31 of FIG. 4) if it has performed the location registration in the IP network 5 (step S82 : YES of FIG. 10). On the other hand, if it has performed the location registration in the mobile communications network 15 (step S82: NO of FIG. 10), it specifies the telephone number of the UE 21 for the mobile communications network 15 as a caller number for accessing to the mobile communications network 15 (step S84 of FIG. 10, and step S31 of FIG. 4).

The call request includes the caller number specified by the UE 21 together with the call destination telephone number, and is transmitted to the call control server 1 in the IP network 5 or the mobile switching system 11 in the mobile communications network 15 for an outgoing connection processing.

FIG. 11 is a flow chart showing the control operation performed by the call control server 1 in FIG. 4 when the UE 21 originates the telephone call.

When the call control server 1 has received the call request of the UE 21 through the IP network 5 (steps S91 and S92: YES of FIG. 11), the call control server 1 stays the caller number in the call request as it is and transmits the call request to the PSTN 31 with the telephone number for the IP network 5 as the caller number (step S93 of FIG. 11 and step S32 of FIG. 4). On the other hand, when the call control server 1 has received the call request of the UE 21 through the mobile switching system 11 in the mobile communications network 15 (steps S91 and S92: NO of FIG. 11, and step S34 of FIG. 4), the call control server 1 converts the caller number in the call request from the telephone number for the mobile communications network 15 to the telephone number for the IP network 5, and transmits the call request to the PSTN 31 with the telephone number for the IP network 5 as the caller number (step S94 of FIG. 11 and step S35 of FIG. 4).

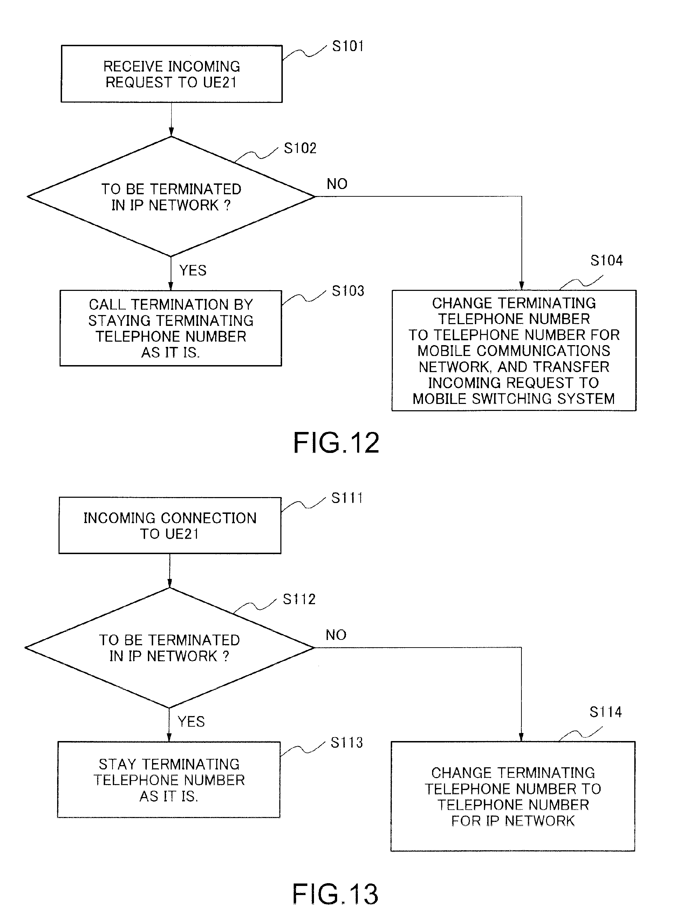

FIG. 12 is a flow chart showing the control operation performed by the call control server 1 in FIG. 7 for the incoming connection to the UE 21.

When the call control server 1 has received the incoming request to the UE 21 (step S101 of FIG. 12 and step S61 of FIG. 7), the call control server 1 judges whether the UE 21 is located in the IP network 5 or in the mobile communications network 15 by inquiring to the subscriber database 4 (step S102 of FIG. 12 and step S62 of FIG. 7).

If the call control server 1 has detected that the UE 21 is under the IP network 5, the call control server 1 performs the call termination processing to the UE 21 without converting the terminating telephone number which is specified as the telephone number for the IP network 5 in the incoming request (steps S102: YES and S103 of FIG. 12. and step S64 of FIG. 7). On the other hand, if the call control server 1 has detected that the UE 21 is under the mobile communications network 15 (step 5102 : NO of FIG. 12), the call control server 1 converts the terminating telephone number in the incoming request from the telephone number for the IP network 5 to the telephone number for the mobile communications network 15, and transfers the incoming request to the mobile switching system 11 in the mobile communications network 15 (step S104 of FIG. 12 and step S68 of FIG. 7). The mobile switching system 11 performs the call termination processing to the UE 21 using the telephone number for the mobile communications network 15 in the incoming request (step S69 of FIG. 7).

FIG. 13 is a flow chart showing the control operation performed by the UE 21 in FIG. 7 for the incoming connection to the UE 21.

When the incoming connection is terminated to the UE 21 (step S111), the UE 21 stays the terminating telephone number as it is which is the telephone number for the IP network 5, if the incoming connection has been processed in the IP network 5 (steps S112: YES and S113 of FIG. 13). On the other hand, the UE 21 converts the terminating telephone number from the telephone number for the mobile communications network 15 to the telephone number for the IP network 5 if the incoming connection has been processed in the mobile communications network k 15 (steps S112: NO and S114 of FIG. 13).

As has been explained above, according to the present invention, the one-number system can be implemented by the call control server 1 and the UE 21 which perform control operations shown in FIGs. 10 to 13. Especially, the call control server 1 converts a caller number to a telephone number for the IP network 5 in a call request transferred from the mobile switching system 11 when it transmits the call request to the PSTN 31, and also converts a terminating telephone number to a telephone number for the mobile communications network 15 in an incoming request received from the PSTN 31 when it transfers the incoming request to the mobile switching system 11. By the processing performed in the call control server 1, the one-number system is realized for the UE 21 which has double telephone numbers, one for the IP network 5 and another for mobile communications network 15, assigned by respective different telecommunications carriers, and the telephone number for the mobile communications network 15 is used in the mobile communications network 15 although an incoming call is accepted at the call control server 1 by the terminating telephone number which is the telephone number for the IP network 5.

The control operations shown in FIG. 3, FIG. 5, FIG. 6, FIG. 8 and FIGs. 10 to 13 can also be realized by a computer readable program stored in advance in a storage media such as a ROM (Read Only Memory) which a CPU (Central Processing Unit) reads and executes the processing.

While this invention has been described in connection with certain exemplary embodiments, it is to be understood that the subject matter encompassed by way of this invention is not to be limited to those specific embodiment. On the contrary, it is intended for the subject matter of the invention to include all alternative, update, and equivalents as can be included within the spirit and scope of the following claims.

Further, the inventers' invention is to retain all equivalents of the claimed invention even if the claims are amended during prosecution.

## Claims

1. A mobile communications system which has a first mobile communications network employing a circuit switching system, a second mobile communications network employing a packet switching system, and at least one mobile terminal, each of said at least one mobile terminal being assigned different telephone numbers by the first and second mobile communications networks, and allows each of the at least one mobile terminal to terminate an incoming request using a telephone number assigned for the second mobile communications network as a telephone number for an incoming request, comprising:
a subscriber database, located in the second mobile communications network, which manages subscriber information of the mobile terminal and registers location information in response to a location registration request made by the mobile terminal to the second mobile communications network, and registers location information in response to a location registration request made by the mobile terminal to the first mobile communications network; and
a call control server which changes a caller number in a call request to a telephone number assigned for the second mobile communications network and transmits the call request to a connection destination upon receiving the call request from the mobile terminal which is located under the first mobile communications network,
wherein when the location registration request is made by the mobile terminal to the first mobile communications network, the location information is also registered in a Home Location Register in the first mobile communications network.

2. The mobile communications system according to claim 1,
wherein the call control server changes a terminating telephone number to a telephone number assigned for the first mobile communications network and transmits the incoming request to the first mobile communications network upon receiving the incoming request to the mobile terminal located in the first mobile communications network.

3. The mobile communications system according to claim 1 or 2,
wherein a mobile switching system in the first mobile communications network performs call termination process to the mobile terminal using a terminating telephone number assigned for the first mobile communications network.

4. A mobile communications system which has a first mobile communications network employing a circuit switching system, a second mobile communications network employing a packet switching system, and at least one mobile terminal, each of said at least one mobile terminal being assigned different telephone numbers by the first and second mobile communications networks, and allows each of the at least one mobile terminal to terminate an incoming request using a telephone number assigned for the second mobile communications network as a telephone number for an incoming request, comprising:
a subscriber database, located in the second mobile communications network, which manages subscriber information of the mobile terminal and registers location information in response to a location registration request made by the mobile terminal to the second mobile communications network, and registers location information in response to a location registration request made by the mobile terminal to the first mobile communications network; and
a call control server which is capable to change a telephone number in a call request and an incoming request depending on an origination of the call request and a destination of the incoming request,
wherein the location information registered by said subscriber database in response to the location registration request made by the mobile terminal to the first mobile communications network includes only information indicating that the mobile terminal is present under the first mobile communications network.

5. The mobile communications system according to claim 4,
wherein the information indicating that the mobile terminal is present under the first mobile communications network includes identification information of a mobile switching system which has requested the location registration for the mobile terminal.

6. The mobile communications system according to claim 1,
wherein said call control server and the second mobile communications network are connected to the first mobile communications network through a PSTN (Public Switched Telephone Network).

7. A call control server which is installed in a mobile communications system having a first mobile communications network employing a circuit switching system, a second mobile communications network employing a packet switching system, and at least one mobile terminal, each of said at least one mobile terminal being assigned different telephone numbers by the first and second mobile communications networks, and allows each of the at least one mobile terminal to terminate an incoming request using a telephone number assigned for the second mobile communications network as a telephone number for an incoming request, the call control server comprising:
a location registration control unit which requests a subscriber database to register location information in response to a location registration request made by the mobile terminal in the second mobile communications network and
obtains subscriber information of the mobile terminal from the subscriber database, and
a call control unit which changes a caller number in a call request to a telephone number assigned for the second mobile communications network and transmits the call request to a connection destination upon receiving the call request from the mobile terminal which is located under the first mobile communications network.

8. The call control server according to claim 7, wherein the call control unit changes a terminating telephone number to the telephone number assigned for the first mobile communications network and transmits an incoming request to the first mobile communications network upon receiving the incoming request to the mobile terminal located under the first mobile communications network.

9. The call control server according to claim 7 or 8, wherein the call control server is connected to the first mobile communications network through a PSTN (Public Switched Telephone Network).

10. A call control method which uses a first mobile communications network employing a circuit switching system, a second mobile communications network employing a packet switching system, and at least one mobile terminal, each said at least one mobile terminal being assigned different telephone numbers for the first and second mobile communications networks, to allow each of the at least one mobile terminal to terminate an incoming request using a telephone number assigned for the second mobile communications network as a telephone number for an incoming request, comprising:
a first registering step for registering location information of the mobile terminal to a subscriber database through a call control server which is installed in the second mobile communications network upon receiving a location registration request from the mobile terminal in the second mobile communications network,
a second registering step for registering location information of the mobile terminal to a subscriber database through a mobile switching system which is installed in the first mobile communications network upon receiving a location registration request from the mobile terminal in the first mobile communications network,
a call request transmitting step performed by the call control server to replace a caller number in a call request from the telephone number assigned for the first mobile communications network to the telephone number assigned for the second mobile communications network, and to transmit the call request to a connection destination upon receiving the call request from the mobile terminal located in the first mobile communications network.

11. The call control method according to claim 10, wherein the first registering step further comprises a first subscriber information receiving step at the call control server from the subscriber database which transmits subscriber information of the mobile terminal in response to the location registration request; and
wherein the second registering step further comprises a second subscriber information receiving step at the mobile switching system from the subscriber database which transmits subscriber information of the mobile terminal in response to the location registration request.

12. The call control method according to claim 10 or 11, further comprising an incoming request transmitting step performed by the call control server to change a terminating telephone number to the telephone number assigned for the first mobile communications network, and to transmit the incoming request to the first mobile communications network upon receiving the incoming request to the mobile terminal located in the first mobile communications network.

13. The call control method according to claim 10, 11 or 12, wherein the second registering step further comprising a HLR (Home Location Register) registering step which registers the location information of the mobile terminal in a Home Location Register in the first mobile communications network prior to requesting the location information registering to the subscriber database.

14. The call control method according to one of Claims 10 to 13, wherein the location information registered in the subscriber database is information indicating that the mobile terminal is present under the first mobile communications network.

15. The call control method according to claim 14, wherein the information indicating that the mobile terminal is present under the first mobile communications network includes identification information of the mobile switching system.
